# EUROPÄISCHE PATENTSCHRIFT

(11) **EP 3 061 961 B1**
(45) Veröffentlichungstag und Bekanntmachung des Hinweises auf die Patenterteilung: **18.04.2018**
(21) Anmeldenummer: 16156820.9
(22) Anmeldetag: 23.02.2016
(51) Int. Cl.: F02M 21/02, F02B 19/10, F16K 1/12, F16K 15/02

(54) **VORKAMMERGASVENTIL**
FRONT CHAMBER VALVE
VANNE DE GAZ DE PRÉCHAMBRE

(30) Priorität: 27.02.2015 AT 501622015
(43) Veröffentlichungstag der Anmeldung: 31.08.2016
(73) Patentinhaber: GE Jenbacher GmbH & Co. OG, 6200 Jenbach (AT)
(72) Erfinder: Jacob, Raphael, 85276 Pfaffenhofen (Ilm) (DE)
(74) Vertreter: Torggler & Hofinger Patentanwälte

(56) Entgegenhaltungen:
- EP-A1- 2 372 135
- EP-A2- 0 480 545
- DE-A1- 10 020 719
- GB-A- 2 082 251
- JP-A- H04 171 256
- US-A- 2 667 155

## Beschreibung

Die Erfindung betrifft ein Vorkammergasventil mit den Merkmalen des Oberbegriffs von Anspruch 1 sowie ein Verfahren zur Herstellung eines solchen Vorkammergasventils.

Ab einer bestimmten Bohrung (in etwa 150 mm) werden (Gas-) Brennkraftmaschinen mit einer Vorkammer zur Zündverstärkung ausgestattet. Eine in die Vorkammer ragende Zündquelle entzündet das dort vorliegende, bei gespülter Vorkammer relativ fette Gemisch, wodurch Zündfackeln von der Vorkammer in einen Hauptbrennraum treten und das dort vorliegende Gemisch entzünden.

Zur Brennstoffversorgung von Vorkammern bestehen verschiedene Konzepte. Bei ungespülten Vorkammern wird im Verdichtungstakt Gemisch aus dem Hauptbrennraum in die Vorkammer gedrückt.
Bei gespülten Vorkammern besteht darüber hinaus die Möglichkeit, die Vorkammer zusätzlich mit Brennstoff zu versorgen. Diese separate Brennstoffversorgung geschieht über ein Vorkammergasventil. Dieses kann im Zylinderkopf direkt oder in einer Zündkerzenhülse angeordnet sein.

Die gattungsbildende EP0480545 (YANMAR DIESEL ENGINE CO) zeigt ein Vorkammergasventil, welches über einen Kanal (18) mit Treibgas versorgt wird. Die Konstruktion besteht aus mehreren konzentrischen hülsenförmigen Komponenten, die ineinander gesteckt werden. Die Gasführung erfolgt teilweise über Tiefbohrungen in den Wandungen der hülsenförmigen Komponenten.

Die JP H04171256 A und die WO 2004/099584 A1 zeigen ein Ventil mit Ventilkörper, Ventilfeder, einer Ventilnadel und einem unteren gasbeaufschlagten Raum. Ebenso ist ein oberer Raum vorhanden, in dem die Ventilfeder angeordnet ist. Als Verschluss des oberen Ventilraumes dient hier eine Kappe, welche über den oberen Ventilraum gestülpt und verschraubt wird und dadurch erst den oberen Ventilraum ausbildet.

In der US 2,667,155 A wird ein Vorkammergasventil beschrieben, welches einen zweiteiligen Ventilkörper, eine Ventilfeder und eine Ventilnadel besitzt. Der untere Ventilraum ist durch Gas beaufschlagt und im oberen Ventilraum sitzt die Feder. Dieser obere Ventilraum wird mit einem Stopfen verschlossen, indem er in den Ventilkörper verschraubt wird. Das ganze Ventil wird hier durch ein separates Bauteil verspannt und somit im Zylinderkopf befestigt. Eine ähnliche Ausführungsform ist aus der GB 2 082 251 A bekannt.

Weitere Vorkammergasventile sind durch die Schriften EP 2 372 135 A1, DE 100 20 719 A1 und EP 0 480 545 A2 bekannt.

Aufgabe der vorliegenden Erfindung ist es ein gegenüber dem Stand der Technik verbessertes Vorkammergasventil bzw. ein Verfahren zur Herstellung eines Vorkammergasventils anzugeben.

Gelöst wird diese Aufgabe durch ein Vorkammergasventil mit den Merkmalen von Anspruch 1 bzw. ein Verfahren zur Herstellung nach Anspruch 8 oder 9. Vorteilhafte Ausführungsformen sind in den abhängigen Ansprüchen angegeben.

Erfindungsgemäß ist vorgesehen, dass der Ventilkörper einstückig ausgebildet ist. Diese Variante ist besonders vorteilhaft, da das so ausgebildete Vorkammergasventil besonders robust ist. Auch entfallen bei der Herstellung aufwendige Montageschritte. Es ist des weiteren Erfindungsgemäß vorgesehen, dass ein im Ventilkörper ausgebildeter Raum, in welchem eine Ventilfeder angeordnet ist, über einen verpressten Stopfen verschlossen ist. Dies stellt eine wesentliche konstruktive Verbesserung gegenüber dem Stand der Technik dar. Aus dem Stand der Technik bekannte Vorkammergasventile werden über Hülsen verschlossen, was eine aufwendige Fertigung von Absätzen zur Zentrierung erfordert.

Es kann vorgesehen sein, dass zum Verspannen der Ventilnadel gegenüber einem Ventilsitz eine Kappe vorgesehen ist, die in den Ventilkörper des Vorkammergasventils einführbar ist und welche mit der Ventilnadel verbunden ist.

Bevorzugt kann vorgesehen sein, dass die Kappe im geöffneten Zustand des Vorkammergasventils an dem Ventilkörper auf Anschlag anliegt. Dies bringt den besonderen Vorteil mit sich, dass die Bewegung der Ventilnadel eine wohldefinierte Endlage hat. Der Anschlag kann vorzugsweise so gebildet sein, dass der obere Raum des Vorkammergasventils wenigstens zwei Abschnitte unterschiedlichen Durchmessers aufweist, wobei die Kappe im Abschnitt mit größerem Durchmesser bewegbar ist und bei Erreichen der Öffnungsposition des Vorkammergasventils auf der zwischen dem Abschnitt mit größerem Durchmesser und dem Abschnitt mit kleinerem Durchmesser gebildeten Schulter aufliegt. In dem Abschnitt mit kleinerem Durchmesser ist günstigerweise die Ventilfeder untergebracht. So erhält die Ventilfeder im Abschnitt mit kleinerem Durchmesser eine Führung.
Damit ist zudem eine besonders kompakte Bauweise und eine gute Herstellbarkeit gewährleistet.

Für die Haltbarkeit der Komponenten (vorzugsweise zumindest des Gehäuses) können diese gehärtet sein. Wäre das Gehäuse zweiteilig, würde die Härtung eine Schweißung erschweren. Jegliche andere Fügetechnik ist platztechnisch schwierig. Die Verbindung müsste dicht und fest sein. Eine einteilige Ausführung des Gehäuses ist daher bevorzugt.

Es kann vorgesehen sein, dass die Führung der Ventilnadel durch den Ventilkörper erfolgt, welcher gleichzeitig auch das Gehäuse des Vorkammergasventils bildet. So wird eine besonders vorteilhafte Bauteilintegration realisiert. Der Ventilkörper übernimmt also mehrere Funktionen.

Es kann vorgesehen sein, dass zwischen dem Sitz des Ventiltellers des Vorkammergasventils und der Einmündung des Vorkammergasventils in eine Vorkammer bzw. zwischen dem Sitz des Ventiltellers des Vorkammergasventils und der Einmündung des Vorkammergasventils in einen Kanal ein Raum vorgesehen ist.
Bevorzugt ist vorgesehen, dass dieser Raum eine weitestgehend birnenförmige, sich zur Vorkammer hin verjüngende Gestalt aufweist.

Schutz wird auch begehrt für Verfahren zur Herstellung eines Vorkammergasventils.

Demnach ist vorgesehen, dass zum Verschließen des oberen Raums ein Stopfen mittels einer Pressverbindung mit dem Ventilkörper verbunden wird.

Alternativ oder zusätzlich ist vorgesehen, dass eine die Ventilfeder gegenüber dem Ventilsitz verspannende Kappe mit der Ventilnadel des Vorkammergasventils über eine Strahlschweißung verbunden wird.

Die Erfindung wird durch die Figuren näher erläutert. Dabei zeigt:
- Fig. 1a bis 1c: eine Zündkerzenhülse
- Fig. 2a bis 2c: eine Zündkerzenhülse
- Fig. 3a bis 3c: eine Zündkerzenhülse
- Fig. 4a bis 4e: Details zu Gaszufuhrkonzept
- Fig. 5a, 5b: ein Vorkammergasventil und eine Variante hierzu.

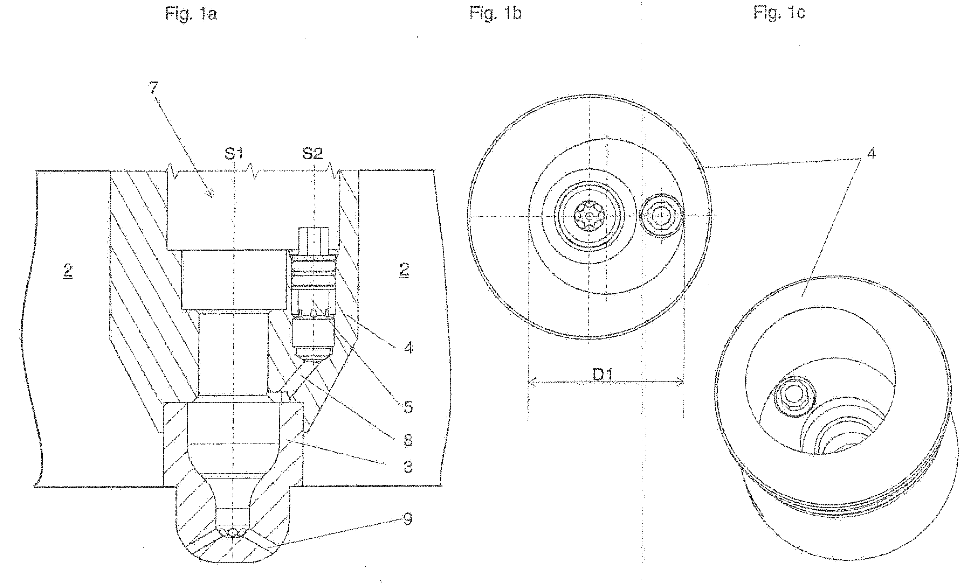

Figuren 1a bis 1c zeigen eine Zündkerzenhülse 4 nach einem ersten Beispiel in drei Ansichten. Die Zündkerzenhülse 4 ist im Einbauzustand in einen Zylinderkopf 2 eingesetzt.

So zeigt Fig. 1a einen Längsschnitt durch die Kavität 7, welche eine Zündkerze 6 (nicht gezeigt) und ein Vorkammergasventil 5 aufnimmt. Die Kavität 7 ist in diesem Beispiel in einer Zündkerzenhülse 4 ausgebildet.

Die Kavität 7 umfasst einerseits einen um die Symmetrieachse S1 konzentrischen Schacht aus Zylinderabschnitten zur Aufnahme einer Zündkerze 6.

Die Kavität 7 weist weiters eine Bohrung 10 mit Symmetrieachse S2 zur Aufnahme eines Vorkammergasventils 5 auf.

Vom Vorkammergasventil 5 führt ein Kanal 8 zur Vorkammer 3. Die Vorkammer 3 besteht einerseits aus der eigentlichen Kavität, also dem Hohlraum, in dem die Entflammung von Gemisch stattfindet. Die Vorkammer 3 ist freilich auch ein physisches Bauteil. In der vorliegenden Ausführungsform ist die Vorkammer 3 als ein der Zündkerzenhülse 4 separates Bauteil ausgeführt und wird mit der Zündkerzenhülse 4 verbunden, beispielsweise verpresst.

Die der Übersichtlichkeit halber nicht gezeigte Zündkerze 6 wird über den zur Symmetrieachse S1 konzentrischen Schacht in die Zündkerzenhülse 4 so eingeführt, dass sie mit der Vorkammer 3 bündig abschließt und ihre Elektroden in die Vorkammer 3 ragen. Die Vorkammer 3 wird vom Vorkammergasventil 5 über den Kanal 8 mit Brenngas angereichert. Nach der Zündung in der Vorkammer 3 tritt entflammtes Gemisch über die Überströmbohrungen 9 in den Hauptbrennraum (nicht gezeigt).

Fig. 1b zeigt eine Draufsicht der Darstellung von Fig. 1a. Zu erkennen sind die innerhalb der Kavität 7 liegenden parallelen zylindrischen Schächte zur Aufnahme einer Zündkerze 6 sowie eines Vorkammergasventils 5. Die Zündkerze 6 ist wie anhand der Fig. 1a erläutert nicht gezeigt. Beim Vorkammergasventil 5 zu erkennen ist ein Achtkant, mit dem das Vorkammergasventil 5 in die Zündkerzenhülse 4 eingeschraubt wird. Im vorliegenden Beispiel existiert ein größter Bohrungsdurchmesser D1 der Kavität 7, welcher in einer Draufsicht die Bohrungen zur Aufnahme der Zündkerze 6 und des Vorkammergasventils 5 umschreibt. In anderen Worten besteht in diesem Beispiel ein gemeinsamer Schacht für Zündkerze 6 und Vorkammergasventil 5.

Die Mittellinie jener größten Bohrung mit Durchmesser D1 liegt zwischen den Symmetrieachsen S1 und S2. Der gemeinsame Schacht hat Vorteile in der Montage von Zündkerze 6 und Vorkammergasventil 5, schwächt allerdings Zündkerzenhülse 4, da nur noch wenig Wandstärke überbleibt.

Fig. 1c zeigt eine perspektivische Ansicht der Zündkerzenhülse 4 dieses Beispiels.

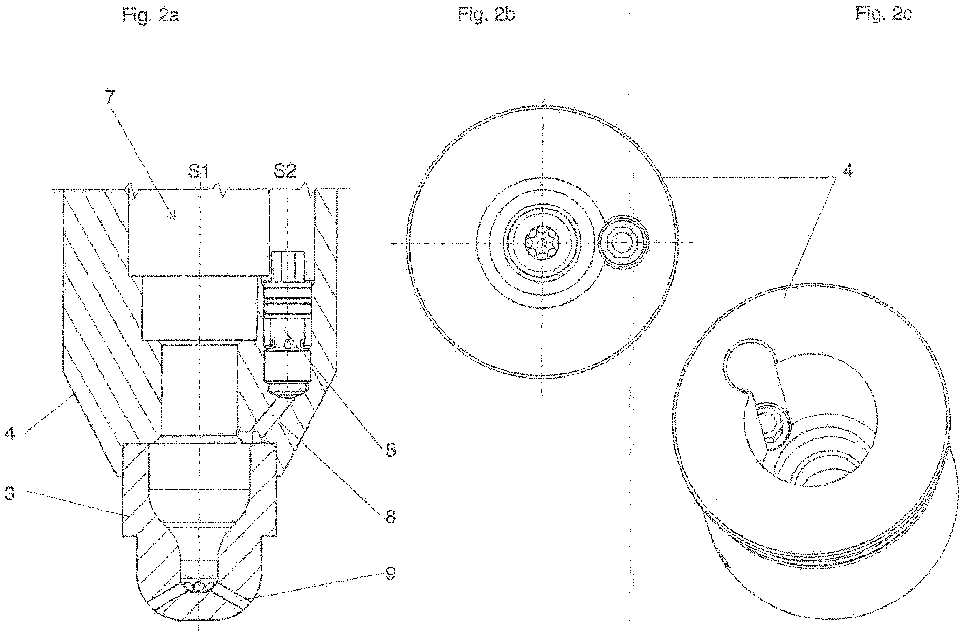

Figuren 2a bis 2c zeigen verschiedene Ansichten einer Zündkerzenhülse 4 nach einem weiteren Beispiel.
Während im Beispiel gemäß der Figuren 1a bis 1c die Kavität 7 einen zylindrischen Abschnitt aufweist, der bei seinem größten Durchmesser sowohl die Bohrung zur Aufnahme der Zündkerze als auch die Bohrung zur Aufnahme des Vorkammergasventils 5 umschreibt, so umfasst im vorliegenden Beispiel der größte Durchmesser der Kavität 7 die Bohrung der Zündkerzenhülse 4 nicht mehr zur Gänze. Vielmehr durchdringt die Bohrung 10 des Vorkammergasventils 5 die Zündkerzenbohrung 11 im deren oberem Abschnitt mit dem größten Durchmesser. Dies wird besonders deutlich in den Darstellungen von Figur 2b und Figur 2c. In einer Draufsicht (Figur 2b) überlappen also die Bohrung 10 zur Aufnahme des Vorkammergasventils 5 und die Bohrung zur Aufnahme der Zündkerze 6.

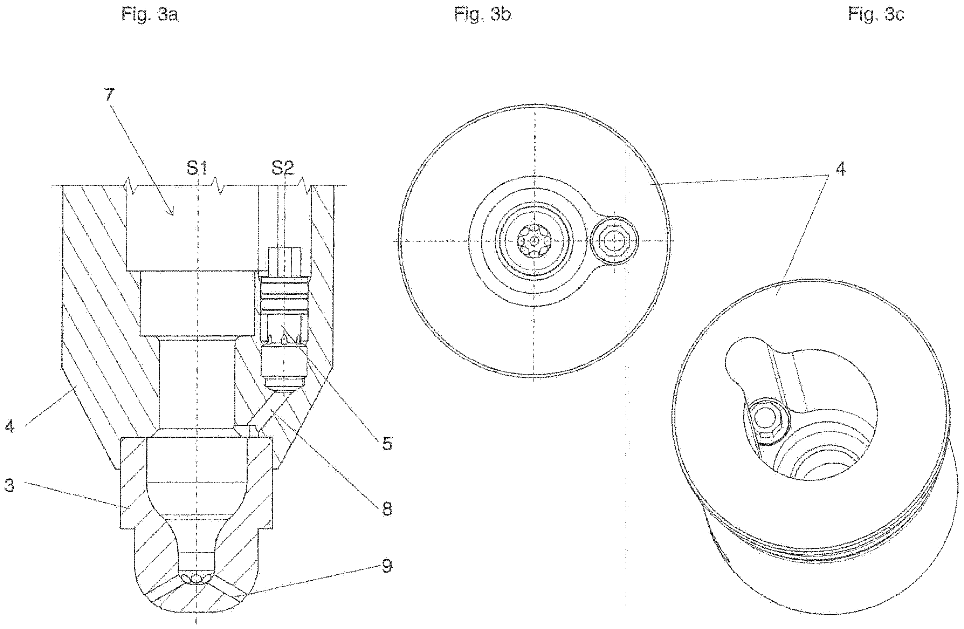

Figuren 3a bis 3c zeigen ein weiteres Beispiel. Hier ist die Bohrung zur Aufnahme des Vorkammergasventils 5 ebenfalls nicht von einem größten Durchmesser der Kavität 7 umschrieben. In anderen Worten durchdringen sich auch hier die Bohrungen zur Aufnahme einer Zündkerze 6 und zur Aufnahme des Vorkammergasventils 5. Im Vergleich zu dem Beispiel nach Figuren 2a bis 2c ist hier die Kontur der Kavität 7 verändert. Die Kontur der Kavität 7 ist hier so ausgestaltet, dass die zylindrischen Bohrungen zur Aufnahme der Zündkerze 6 und des Vorkammergasventils 5 fließend ineinander übergehen. In anderen Worten sind die scharfen Übergänge des Beispiels nach Figuren 2a bis 2c hier durch einen sanften Radius im Übergang der zwei Bohrungen ersetzt.

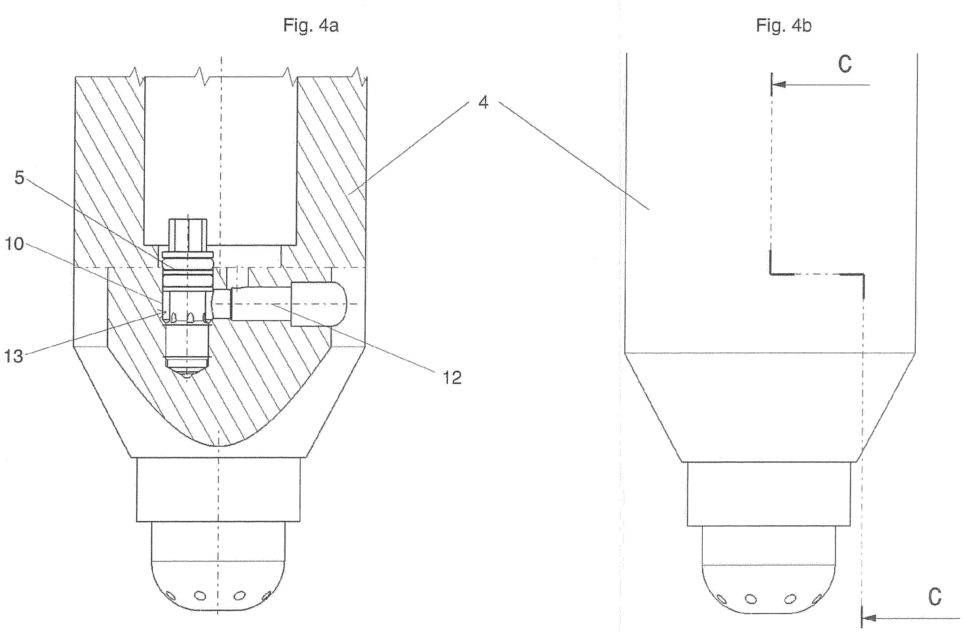

Fig. 4a zeigt einen Schnitt durch eine Zündkerzenhülse 4, wobei der Schnitt solchermaßen gelegt wurde, dass die Gaszuführung an das Vorkammergasventil 5 deutlich wird. Die Schnittführung ist in Fig. 4b skizziert. Zu erkennen ist der Gaszufuhrkanal 12, wie er in die das Vorkammergasventil 5 tragende Bohrung 10 mündet. Die Bohrung 10 bildet zusammen mit dem Vorkammergasventil 5 einen Ringkanal 13, in welchen der Gaszufuhrkanal 12 mündet. Aus dem von Bohrung 10 und Vorkammergasventil 5 gebildeten Ringkanal 13 wird das einströmende Gas gleichmäßig in das Vorkammergasventil 5 geleitet.

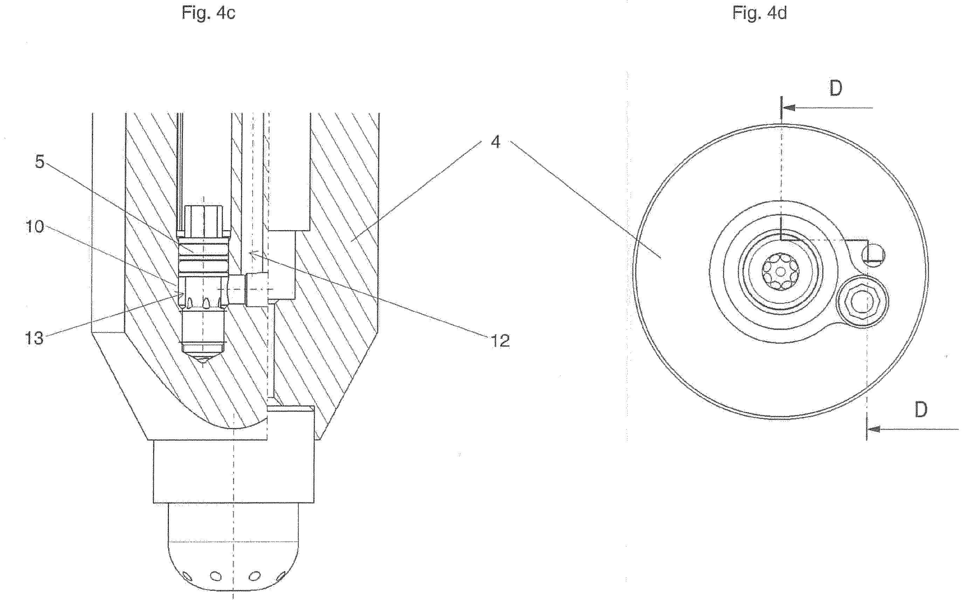

Fig. 4c zeigt einen Längsschnitt durch die Zündkerzenhülse 4. Die Schnittführung geht aus der Fig. 4d hervor. Wie in Fig. 4c ersichtlich, die Schnittführung ist hier so gewählt, dass auch der parallel zur Symmetrieachse S1 verlaufende Teil des Gaszufuhrkanals 12 erkennbar ist.

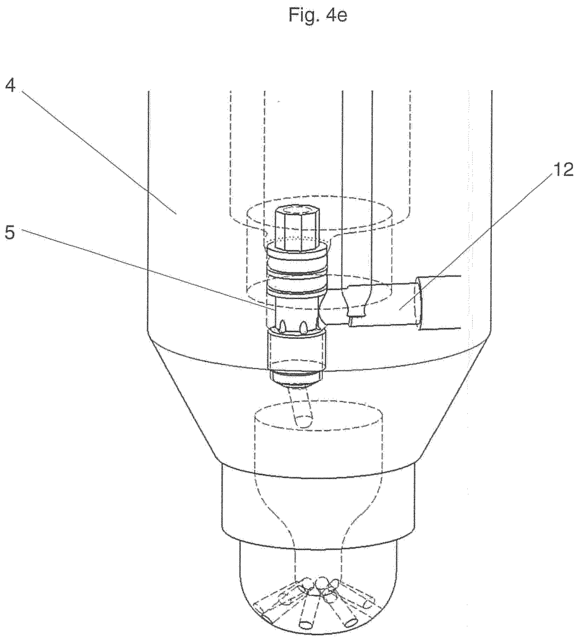

Fig. 4e zeigt in einer perspektivischen, isometrischen Ansicht die Anordnung von Vorkammergasventil 5 und dessen Gasversorgung. Die Gasversorgung erfolgt durch den horizontalen und den vertikalen Abschnitt des Gaszufuhrkanales 12.

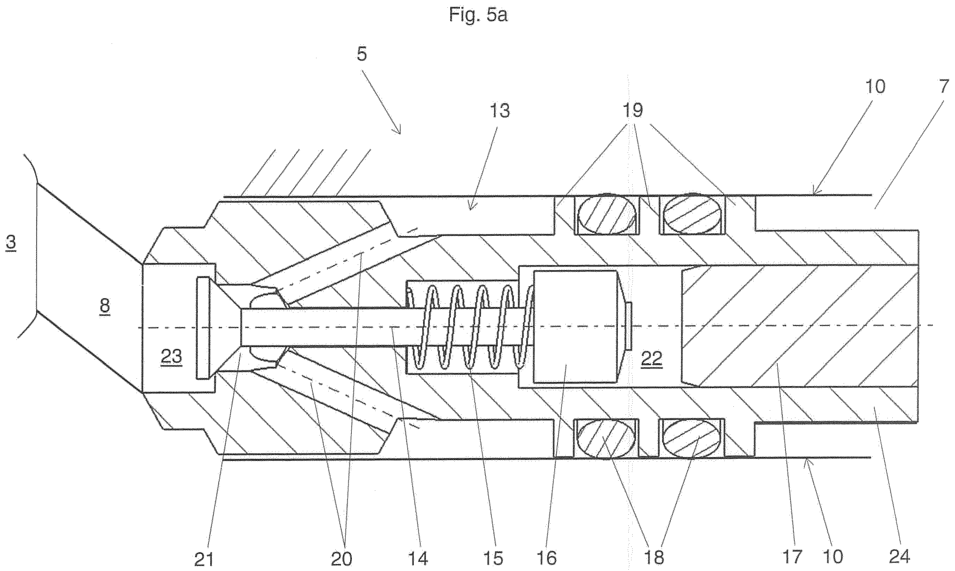

Fig. 5a zeigt eine Schnittdarstellung des Vorkammergasventiles 5. Gut erkennbar ist der Ringkanal 13, der zwischen der Wandung 10 der Kavität und der Außenkontur des Vorkammergasventils 5 gebildet ist. Die Wandung 10 kann entweder von dem Zylinderkopf 2 selbst gebildet sein oder von einer in den Zylinderkopf 2 eingesetzten Zündkerzenhülse 4.

Die Ventilnadel 14 wird von der Feder 15 gegen ihren Sitz verspannt. Die Kappe 16 umgreift die Feder 15 und ist mit der Ventilnadel 14 verbunden. Die Verbindung kann bevorzugt über eine Strahlschweißung erfolgen. Im vorliegenden Ausführungsbeispiel ist der besonders bevorzugte Fall gezeigt, dass die Kappe 16 im geöffneten Zustand des Vorkammergasventils 5 an dem Ventilkörper 24 auf Anschlag anliegt. Dies bringt den besonderen Vorteil mit sich, dass die Bewegung der Ventilnadel 14 eine wohldefinierte Endlage hat. Der obere Raum 22 des Vorkammergasventils 5 ist dazu in zwei zylindrische Abschnitte unterschiedlichen Durchmessers unterteilt. In der vorliegenden Figur rechts, also in Richtung Stopfen 17 ist die Kappe 17 in Richtung der Längsachse des Vorkammergasventils 5 bewegbar. Bei Erreichen der Öffnungsposition des Vorkammergasventils 5 befindet sich die Kappe 17 auf Anschlag mit der zwischen dem Abschnitt mit größerem Durchmesser und dem Abschnitt mit kleinerem Durchmesser in Raum 22 gebildeten Schulter. In dem Abschnitt des Raums 22 mit kleinerem Durchmesser ist die Ventilfeder 15 untergebracht.

Der Stopfen 17 verschließt den Raum 22 und dichtet das Vorkammergasventil 5 nach oben hin ab. Hier ist der Stopfen 17 mittels eines Presssitzes mit dem Ventilkörper 24 verbunden. Der Ventilkörper 24 erstreckt sich in einem Stück vom Ventilsitz im Zylinderkopf 2 bis hin zum abgewandten Ende (des Vorkammergasventiles 5) des Ventilsitzes.

Unmittelbar vor dem Ventilsitz ist ein weiterer Raum 21 ausgebildet. Der Raum 21 wird von den Kanälen 20 ausgehende vom Ringspalt 13 mit Gas versorgt.

Zwischen dem Sitz des Ventiltellers des Vorkammergasventils 5 und der Einmündung des Vorkammergasventils 5 in eine Vorkammer 3 bzw. zwischen dem Sitz des Ventiltellers des Vorkammergasventils 5 und der Einmündung des Vorkammergasventils 5 in einen Kanal 8 liegt ein weiterer Raum 23. In der vorliegenden Figur zylindrisch ausgebildet, kann der Raum 23 auch andere Formen annehmen. Er kann zum Beispiel birnenförmig ausgebildet sein.

Die Dichtung des Ringkanals 13 gegenüber der Kavität 7 erfolgt radial über die O-Ringe 18. Diese sind in von den Vorsprüngen 19 gebildeten, ringförmigen Aufnahmen angeordnet. Das Dichtkonzept des hier gezeigten Vorkammergasventils 5 sieht also vor, dass die Dichtung des Vorkammergasventils 5 radial, d. h. über die Außenfläche des Vorkammergasventils 5 erfolgt.

Die dem Ringkanal 13 zugewandte Flanke des Vorsprungs 19 begrenzt den Ringkanal 13 mit. Der Vorsprung 19 hat also einerseits die Funktion der Schaffung einer Aufnahme für ein Dichtmittel, hier als O-Ring realisiert, andererseits begrenzt der Vorsprung 19 den Ringkanal 13 mit.

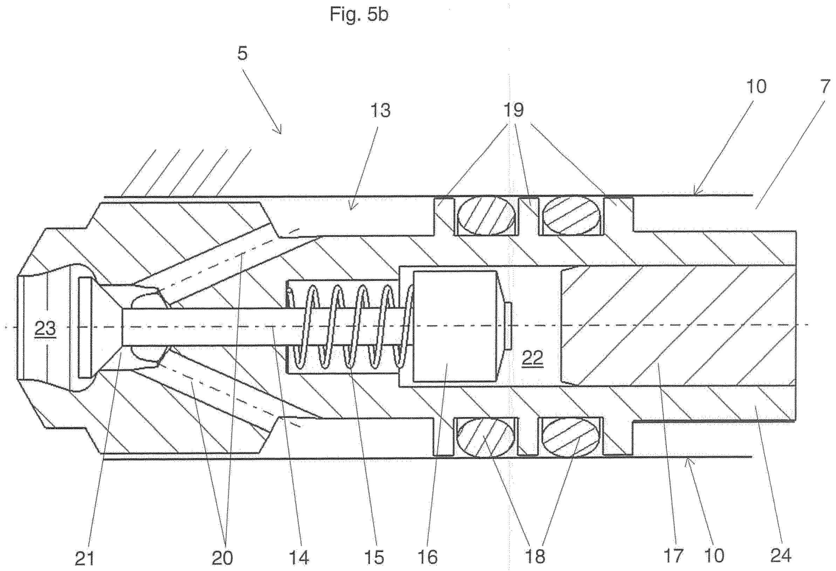

Fig. 5b zeigt eine Variante zu Figur 5a, in welcher der Raum 23 eine weitestgehend birnenförmige, sich zur Vorkammer 3 hin verjüngende Gestalt aufweist. Diese Ausgestaltung ist strömungstechnisch besonders vorteilhaft.

### Liste der verwendeten Bezugszeichen:

- 1: Brennkraftmaschine
- 2: Zylinderkopf
- 3: Vorkammer
- 4: Zündkerzenhülse
- 5: Vorkammergasventil
- 6: Zündkerze
- 7: Kavität
- 8: Kanal
- 9: Überströmbohrung
- 10: Wandung der Kavität 7
- 11: Zündkerzenbohrung
- 12: Gaszufuhrkanal
- 13: Ringkanal
- 14: Ventilnadel
- 15: Ventilfeder
- 16: Kappe
- 17: Stopfen
- 18: O-Ring
- 19: Vorsprung
- 20: Gaskanal
- 21: Untere Kavität des Vorkammergasventils
- 22: Obere Kavität des Vorkammergasventils
- 23: Raum
- 24: Ventilkörper
- S1: Symmetrieachse
- S2: Symmetrieachse

## Patentansprüche

1. Vorkammergasventil (5) umfassend einen Ventilkörper (24), wenigstens eine Ventilfeder (15) und wenigstens eine Ventilnadel (14), wobei der Ventilkörper (24) einen unteren, im Betriebszustand gasbeaufschlagten Raum (21) und einen oberen Raum (22), in welchem die Ventilfeder (15) angeordnet ist, aufweist, **dadurch gekennzeichnet, dass** der obere Raum (22) über einen verpressten Stopfen (17) verschlossen ist, wobei der Ventilkörper (24) einstückig ausgebildet ist.

2. Vorkammergasventil (5) nach Anspruch 1, **dadurch gekennzeichnet, dass** zum Verspannen der Ventilnadel (14) gegenüber einem Ventilsitz eine Kappe (16) vorgesehen ist, die in den Ventilkörper (24) des Vorkammergasventils (5) einführbar ist und welche mit der Ventilnadel (14) verbunden ist.

3. Vorkammergasventil (5) nach Anspruch 2, **dadurch gekennzeichnet, dass** die Kappe (16) im geöffneten Zustand des Vorkammergasventils (5) an dem Ventilkörper (24) auf Anschlag anliegt.

4. Vorkammergasventil (5) nach wenigstens einem der vorangegangenen Ansprüche, **dadurch gekennzeichnet, dass** die Führung der Ventilnadel (14) durch den Ventilkörper (24) selbst erfolgt, welcher gleichzeitig auch das Gehäuse des Vorkammergasventils (5) bildet.

5. Vorkammergasventil (5) nach wenigstens einem der vorangegangenen Ansprüche, **dadurch gekennzeichnet, dass** zwischen dem Sitz des Ventiltellers des Vorkammergasventils (5) und der Einmündung des Vorkammergasventils (5) in eine Vorkammer (3) bzw. zwischen dem Sitz des Ventiltellers des Vorkammergasventils (5) und der Einmündung des Vorkammergasventils (5) in einen Kanal (8) ein Raum (23) vorgesehen ist.

6. Vorkammergasventil (5) nach Anspruch 5, **dadurch gekennzeichnet, dass** der Raum (23) eine weitestgehend birnenförmige, sich zur Vorkammer (3) hin verjüngende Gestalt aufweist.

7. Vorkammergasventil (5) nach wenigstens einem der vorangegangenen Ansprüche, **dadurch gekennzeichnet, dass** das Vorkammergasventil (5) an seiner Außenkontur wenigstens einen Vorsprung (19) aufweist, dessen einem Ringkanal (13) zugewandte Flanke den Ringkanal (13) mitbegrenzt und an dessen anderer Flanke ein Dichtmittel zur Abdichtung des Vorkammergasventils (5) gegenüber einer Wandung (10) einer das Vorkammergasventil (5) aufnehmenden Kavität (7) anliegt.

8. Verfahren zum Herstellen eines Vorkammergasventils (5), vorzugsweise eines Vorkammergasventils (5) nach wenigstens einem der vorangegangenen Ansprüche, umfassend einen Ventilkörper (24), wobei der Ventilkörper (24) einen unteren, im Betriebszustand gasbeaufschlagten Raum (21) und einen oberen Raum (22), in welchem eine Ventilfeder (15) angeordnet ist, aufweist, **dadurch gekennzeichnet, dass** zum Verschließen des oberen Raums (22) ein Stopfen (17) mittels einer Pressverbindung mit dem Ventilkörper (24) verbunden wird, wobei der Ventilkörper (24) einstückig ausgebildet ist.

9. Verfahren zum Herstellen eines Vorkammergasventils (5) nach Anspruch 8, umfassend eine Ventilfeder (15) zum Verspannen einer Ventilnadel (14) gegenüber einem Ventilsitz, **dadurch gekennzeichnet, dass** eine die Ventilfeder (15) gegenüber dem Ventilsitz verspannende Kappe (16) mit der Ventilnadel (14) des Vorkammergasventils (5) über eine Strahlschweißung verbunden wird.

## Claims

1. A pre-chamber gas valve (5) including a valve body (24), at least one valve spring (15) and at least one valve needle (14), wherein the valve body (24) has a lower space (21) which is acted upon with gas in the operating condition and an upper space (22) in which the valve spring (15) is arranged, **characterised in that** the upper space (22) is closed by way of a pressed plug (17), wherein the valve body (24) is in one piece.

2. A pre-chamber gas valve (5) as set forth in claim 1, **characterised in that** provided for bracing the valve needle (14) with respect to a valve seat is a cap (16) which can be introduced into the valve body (24) of the pre-chamber gas valve (5) and which is connected to the valve needle (14).

3. A pre-chamber gas valve (5) as set forth in claim 2, **characterised in that** the cap (16) bears in a condition of abutment against the valve body (24) in the opened condition of the pre-chamber gas valve (5).

4. A pre-chamber gas valve (5) as set forth in at least one of the preceding claims, **characterised in that** guidance of the valve needle (14) is effected by the valve body (24) itself, which at the same time also forms the housing of the pre-chamber gas valve (5).

5. A pre-chamber gas valve (5) as set forth in at least one of the preceding claims **characterised in that** provided between the seat of the valve head of the pre-chamber gas valve (5) and the mouth opening of the pre-chamber gas valve (5) into a pre-chamber (3) or rather between the seat of the valve head of the pre-chamber gas valve (5) and the mouth opening of the pre-chamber gas valve (5) into a passage (8) is a space (23).

6. A pre-chamber gas valve (5) as set forth in claim 5, **characterised in that** the space (23) is of a substantially pear-shaped configuration which narrows towards the pre-chamber (3).

7. A pre-chamber gas valve (5) as set forth in at least one of the preceding claims **characterised in that** at its outside contour the pre-chamber gas valve (5) has at least one projection (19) whose flank that is towards an annular passage (13) also delimits the annular passage (13) and against the other flank of which bears a sealant for sealing off the pre-chamber gas valve (5) with respect to a wall (10) of a cavity (7) accommodating the pre-chamber gas valve (5).

8. A method for producing a pre-chamber gas valve (5), preferably a pre-chamber gas valve (5) as set forth in at least one of the preceding claims, including a valve body (24), wherein the valve body (24) has a lower space (21) acted upon with gas in the operating condition and an upper space (22) in which a valve spring (15) is arranged, **characterised in that** to close the upper space (22) a plug (17) is connected to the valve body (24) by means of a press connection, wherein the valve body (24) is in one piece.

9. A method for producing a pre-chamber gas valve (5) as set forth in claim 8 including a valve spring (15) for bracing a valve needle (14) with respect to a valve seat, **characterised in that** a cap (16) bracing the valve spring (15) with respect to the valve seat is connected to the valve needle (14) of the pre-chamber gas valve (5) by way of a beam welding.

## Revendications

1. Soupape à gaz de préchambre (5), comprenant un corps de soupape (24), au moins un ressort de soupape (15) et au moins une aiguille de soupape (14), le corps de soupape (24) présentant un espace inférieur (21), alimenté en gaz dans l'état de fonctionnement, et un espace supérieur (22) dans lequel est disposé le ressort de soupape (15), **caractérisée en ce que** l'espace supérieur (22) est fermé par le biais d'un bouchon (17) compressé, le corps de soupape (24) étant constitué d'un seul tenant.

2. Soupape à gaz de préchambre (5) selon la revendication 1, **caractérisée en ce que**, pour le serrage de l'aiguille de soupape (14) par rapport à un siège de soupape, il est prévu un capuchon (16) qui peut être introduit dans le corps de soupape (24) de la soupape à gaz de préchambre (5) et qui est raccordé à l'aiguille de soupape (14).

3. Soupape à gaz de préchambre (5) selon la revendication 2, **caractérisée en ce que**, dans l'état ouvert de la soupape à gaz de préchambre (5), le capuchon (16) est adjacent en butée au corps de soupape (24).

4. Soupape à gaz de préchambre (5) selon au moins l'une des revendications précédentes, **caractérisée en ce que** le guidage de l'aiguille de soupape (14) s'effectue par le corps de soupape (24) lui-même, lequel forme simultanément le logement de la soupape à gaz de préchambre (5).

5. Soupape à gaz de préchambre (5) selon au moins l'une des revendications précédentes, **caractérisée en ce qu'**il est prévu un espace (23) entre le siège de la tête de soupape de la soupape à gaz de préchambre (5) et l'embouchure de la soupape à gaz de préchambre (5) dans une préchambre (3) ou respectivement entre le siège de la tête de soupape de la soupape à gaz de préchambre (5) et l'embouchure de la soupape à gaz de préchambre (5) dans un canal (8).

6. Soupape à gaz de préchambre (5) selon la revendication 5, **caractérisée en ce que** l'espace (23) présente une constitution, très largement en forme de poire, qui se rétrécit vers l'préchambre (3).

7. Soupape à gaz de préchambre (5) selon au moins l'une des revendications précédentes, **caractérisée en ce que** la soupape à gaz de préchambre (5) présente sur son contour extérieur au moins une saillie (19) dont le flanc tourné vers un canal annulaire (13) délimite conjointement le canal annulaire (13) et à l'autre flanc de laquelle un moyen d'étanchéité est adjacent pour rendre étanche la soupape à gaz de préchambre (5) vis-à-vis d'une paroi (10) d'une cavité (7) recevant la soupape à gaz de préchambre (5).

8. Procédé de fabrication d'une soupape à gaz de préchambre (5), de préférence d'une soupape à gaz de préchambre (5) selon au moins l'une des revendications précédentes, comprenant un corps de soupape (24), le corps de soupape (24) présentant un espace inférieur (21), alimenté en gaz dans l'état de fonctionnement, et un espace supérieur (22) dans lequel est disposé un ressort de soupape (15), **caractérisé en ce que**, pour la fermeture de l'espace supérieur (22), un bouchon (17) est raccordé au corps de soupape (24) au moyen d'un raccordement par compression, le corps de soupape (24) étant constitué d'un seul tenant.

9. Procédé de fabrication d'une soupape à gaz de préchambre (5) selon la revendication 8, comprenant un ressort de soupape (15) pour le serrage d'une aiguille de soupape (14) vis-à-vis d'un siège de soupape, **caractérisé en ce qu'**un capuchon (16) serrant le ressort de soupape (15) vis-à-vis du siège de soupape est raccordé à l'aiguille de soupape (14) de la soupape à gaz de préchambre (5) par le biais d'un soudage par rayonnement.
